(19) Europäisches Patentamt
European Patent Office
Office européen des brevets

(11) **EP 4 027 188 B1**

(12) **EUROPÄISCHE PATENTSCHRIFT**

(45) Veröffentlichungstag und Bekanntmachung des Hinweises auf die Patenterteilung:
**12.03.2025   Patentblatt 2025/11**

(21) Anmeldenummer: **21151231.4**

(22) Anmeldetag: **12.01.2021**

(51) Internationale Patentklassifikation (IPC):
*G02F 1/09* (2006.01)

(52) Gemeinsame Patentklassifikation (CPC):
**G02F 1/09;** G02F 2203/13

(54) **SCHMALBANDIGE THZ-STRAHLUNGSQUELLE, EMITTER DAFÜR UND VERFAHREN ZUR HERSTELLUNG EINES EMITTERS**

NARROWBAND THZ RADIATION SOURCE, EMITTER THEREFORE AND METHOD FOR MANUFACTURING AN EMITTER

SOURCE DE RAYONNEMENT THZ À BANDE ÉTROITE, SON ÉMETTEUR ET PROCÉDÉ DE MANUFACTURE D'UN ÉMETTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.07.2022   Patentblatt 2022/28**

(73) Patentinhaber: **Martin-Luther-Universität Halle-Wittenberg**
**06108 Halle (Saale) (DE)**

(72) Erfinder: **Schmidt, Georg**
**06120 Halle (DE)**

(74) Vertreter: **Beetz & Partner mbB**
**Patentanwälte**
**Prinzregentenstraße 54**
**80538 München (DE)**

(56) Entgegenhaltungen:
WO-A1-2015/151819        CN-A- 110 441 929
DE-A1- 102012 224 376

EP 4 027 188 B1

**Beschreibung**

Vor einer Weile wurde von T. Kampfrath ein sogenannter spintronischer Emitter für THz Strahlung demonstriert, in dem aus einer metallischen Multilage durch Bestrahlung mit einem fs-Laser von Vorder- oder Rückseite ein THz Puls erzeugt wird (z.B. Nature Nanotechnology volume 8, pages256-260(2013)). Der Puls ist breitbandig und ungerichtet. Seither sind diverse Abwandlungen dieses Grundaufbaus bekannt geworden, unter anderem offenbart CN 110 441 929 A einen THz-Emitter mit einem Substrat, und einer über dem Substrat aufgebrachten ferromagnetischen Schicht, bei dem die Schicht als Gitter strukturiert ist, so dass durch Drehen des Emitters um eine Oberflächennormale der Winkel zwischen einer Richtung des Gitters und der Polarisation des darauf eintreffenden Laserstrahls und mit diesem die Intensität der THz-Emission gesteuert werden kann. Um das Spektrum der THz-Strahlung zu beeinflussen, wird empfohlen, Materialien und Dicken der ferromagnetischen Schicht zu variieren, wobei allerdings keine Angaben gemacht werden, die es erlauben würden, ohne umfassendes Experimentieren einen Emitter gezielt für eine bestimmte Wellenlänge zu optimieren, noch ein Grund ersichtlich ist, weswegen die sich offenbar in gleicher Richtung wie der Laserstrahl ausbreitende THz-Strahlung schmalbandiger sein sollte als die des von Kampfrath beschriebenen Aufbaus. An die Oberflächenbeschaffenheit eines Substrats, auf dem das Gitter strukturiert wird, werden keine Anforderungen gestellt.

Eine Aufgabe der Erfindung ist, eine THz-Strahlungsquelle anzugeben, die tatsächlich in der Lage ist, THz-Strahlung mit einer Bandbreite bereitzustellen, die deutlich kleiner ist als die eines herkömmlichen spintronischen Emitters mit homogener ferromagnetischer Schicht. Weitere Aufgaben sind, einen für eine solche schmalbandige Strahlungsquelle geeigneten Emitter und ein Verfahren zu dessen Herstellung anzugeben.

Die Aufgaben werden zum einen gelöst durch eine THz-Strahlungsquelle nach Anspruch 8. indem bei der THz-Strahlungsquelle mit einem wenigstens eine als Gitter strukturierte ferromagnetische Schicht umfassenden Emitter und einer Laserquelle zum Lenken von kurzen Laserpulsen auf den Emitter in einer Einfallsrichtung, gekennzeichnet durch eine Blende, die einen von dem Emitter in einer Ausgangsrichtung ausgehenden Strahlengang für THz-Strahlung definiert, deren Wellenlänge kleiner ist als eine Gitterkonstante des Gitters, und wobei die Ausgangsrichtung weder in der Einfallsrichtung noch in einer Ausfallsrichtung von an dem Emitter gespiegelten Laserpulsen orientiert ist.

Die Elemente des Gitters werden von den Laserpulsen in einem durch ihre Positionen relativ zur Einfallsrichtung vorgegebenen Zeit- und Phasenversatz angeregt und erzeugen dementsprechend auch die THz-Strahlung mit entsprechendem Versatz. Jedes Element kann als eine Strahlungsquelle aufgefasst werden, die die THz-Strahlung in bekannter Weise breitbandig und ungerichtet emittiert. Für Spektralanteile, deren Wellenlänge größer ist als die Gitterkonstante, d.h. der Abstand zwischen benachbarten Elementen des Gitters, verhält sich das Gitter wie eine ausgedehnte strukturlose Quelle; diese Spektralanteile werden vom Gitter ungerichtet emittiert. Bei den Spektralanteilen, deren Wellenlänge kleiner ist als die Gitterkonstante bringt es der Zeit- und Phasenversatz, mit dem die Elemente des Gitters angeregt werden, jedoch mit sich, dass die von den verschiedenen Elementen ausgehenden Wellenfronten einander nur in bestimmten diskreten Ausgangsrichtungen konstruktiv überlagern und sich dazwischen gegenseitig auslöschen. Um selektiv schmalbandige THz-Strahlung einer gewünschten Wellenlänge zu erhalten, genügt es daher, die Blende in der Ausgangsrichtung der gewünschten Wellenlänge zu platzieren.

Die Aufgaben werden ferner gelöst durch einen Emitter für eine THz-Strahlungsquelle nach Anspruch 1.

Wenigstens die ersten Flanken sollten eben sein.

Ein solcher Emitter ist einfach zu fertigen, indem ein metallhaltiger Materialstrom unter derart streifendem Einfall auf die Oberfläche gelenkt wird, dass jede zweite Flanke im Strömungsschatten einer ersten Flanke liegt, so dass Metall nur auf den ersten Flanken abgeschieden wird.

Der Materialstrom kann eine gasförmige metallhaltige Verbindung enthalten, die durch Zersetzung Metall an der Oberfläche abscheidet; im einfachsten Fall enthält sie das abzuscheidende Metall als Dampf; vorzugsweise wird sie durch Kathodenzerstäubung eines metallischen Targets, auch als Magnetronsputtern bezeichnet, oder durch Ionenstrahldeposition erhalten.

Der streifende Einfall vereinfacht die Realisierung eines Emitters, bei dem die ersten Flanken jeweils in einem talseitigen Teil frei von dem Streifen sind und einem talfernen Teil von dem Streifen bedeckt sind. Je streifender die Strömung orientiert ist, um so schmalere Streifen werden gebildet.

Um eine im Schnitt wellenförmige Oberfläche zu realisieren, eignet sich besonders ein Substrat aus einem Halbleitereinkristall. In einem solchen Kristall können die ersten und zweiten Flanken unmittelbar durch anisotropes Ätzen gebildet werden. Der Halbleiter ist typischerweise Silizium.

Mit bekannten anisotropen Ätztechniken ist insbesondere eine [100]-Kristallebene angreifbar, während [111]-Ebenen gegen das Ätzen beständig sind. Daher ist bevorzugt, dass die mittlere Oberflächennormale einer [100]-Achse des Einkristalls entspricht und/oder die ersten Flanken [111]-Ebenen des Einkristalls sind.

Anstatt direkt die Metallstreifen darauf abzuscheiden, kann die geätzte Oberfläche des Halbleitereinkristalls auch genutzt werden, um daran ein Substrat aus anderem Material, insbesondere aus Kunststoff, abzuformen und anschließend auf diesem die Metallstreifen abzuscheiden. So kann der Emitter insbesondere in großen Stückzahlen günstig gefertigt werden.

Wenn das Substrat biegsam ist, dann kann es zu einer Zylinderfläche geformt werden, um die emittierte Strahlung zu bündeln und durch geeignetes Platzieren der Blende die emittierte Strahlung spektral zu filtern.

Wenn die abgeformten ersten und zweiten Flanken des Substrats wie oben erwähnt [111]-Ebenen des Einkristalls sind, dann resultiert daraus ein Winkel zwischen den Flanken von 110-115°.

Um die THz-Strahlung mit hoher Effizienz zu erzeugen, ist bevorzugt, dass von Einfalls- und Ausgangsrichtung eine in Richtung der mittleren Oberflächennormale und/oder die andere in Richtung einer Normalen der ersten Flanken ausgerichtet ist.

Um bei fester Einfalls- und Ausgangsrichtung schmalbandige THz-Strahlung mit unterschiedlichen Wellenlängen erzeugen zu können, kann der Emitter Zonen mit unterschiedlicher Gitterkonstante aufweisen, die wahlweise im Strahl der Laserquelle platzierbar sind. Dabei kann es sich um diskrete Zonen handeln, deren Gitterkonstanten sich jeweils von einer Zone zur anderen schrittweise ändern; besonders interessant ist allerdings ein Gitter, bei dem der Abstand zwischen den Streifen nicht konstant ist sondern sich langsam genug ändert, damit einerseits die gewünschte Beugung der THz-Strahlung auftritt, andererseits aber durch Verschieben des Emitters die Wellenlänge der Strahlung, die auf die Blende trifft, kontinuierlich durchgestimmt werden kann.

Gegenstand der Erfindung ist ferner ein Verfahren zum Fertigen eines Emitters nach Anspruch 12.

Zum Bereitstellen des Substrats können vorbereitende Schritte

- Bilden eines Gitters aus Streifen eines ätzbeständigen Materials auf einer ursprünglichen Oberfläche eines Halbleiterkristalls,
- Anisotropes Ätzen des Halbleiterkristalls, um eine geätzte Oberfläche zu bilden, die zwischen den Streifen Gräben mit jeweils einer ersten und einer zweiten Flanke aufweist, wobei die Oberflächennormalen der ersten und zweiten Flanken relativ zur Oberflächennormalen der ursprünglichen Oberfläche in entgegengesetzte Richtungen geneigt sind durchgeführt werden.

Die die dem metallhaltigen Materialstrom ausgesetzte Oberfläche kann die geätzte Oberfläche selber oder eine durch Abformen der geätzten Oberfläche erhaltene Oberfläche sein.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1    einen Siliziumkristall mit für die Herstellung eines Emitters strukturierter Oberfläche;

Fig. 2    den Siliziumkristall nach anisotropem Ätzen;

Fig. 3    den Siliziumkristall während des Abscheidens eines Gitters gemäß einer ersten Ausgestaltung der Erfindung;

Fig. 4    den Siliziumkristall während des Abformens gemäß einer zweiten Ausgestaltung der Erfindung;

Fig. 5    ein beim Abformen erhaltenes Substrat während des Abscheidens eines Gitters;

Fig. 6    eine THz-Strahlungsquelle mit einem Emitter gemäß der Erfindung; und

Fig. 7    eine Abwandlung der THz-Strahlungsquelle gemäß der Erfindung.

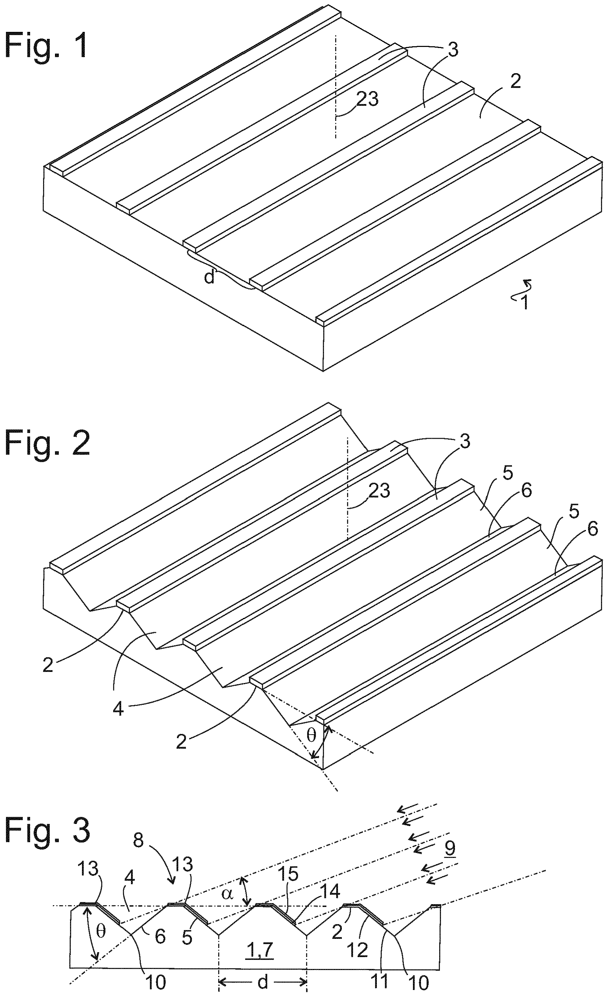

Fig. 1 zeigt in einer schematischen perspektivischen Ansicht einen Ausschnitt aus einem einkristallinen Siliziumwafer 1 oder einem anderen anisotrop ätzbaren kristallinen Material. Auf einer [100]-Oberfläche 2 des Wafers 1 sind Streifen 3 eines ätzbeständigen Materials, insbesondere aus SiN, gebildet. Die Streifen 3 sind in [011]-Richtung orientiert. Der Abstand d der Streifen 3 ist etwas größer als die Wellenlänge von THz-Strahlung, die mit einem aus dem Wafer 1 herzustellenden Emitter schmalbandig erzeugt werden soll. In der Praxis liegt er in der Größenordnung von mehreren 100 μm; er kann z.B. 300 μm betragen.

Das Wafer 1 wird einem anisotropem Ätzen unterzogen. Die Technik des anisotropen Ätzens, z.B mit KOH, ist auf dem Gebiet der Halbleiterbauelementefertigung verbreitet und wird daher nicht erläutert. Die [100]-Oberfläche 2 wird beim anisotropen Ätzen wesentlich schneller angegriffen als die beim Vordringen der Ätzfront in den Wafer 1 nach und nach entlang der Kanten der Streifen 3 ins Innere des Wafers 1 vordringenden [111]-Oberflächen. Der Ätzvorgang kommt praktisch zum Erliegen, wenn von einander zugewandten Kanten von zwei benachbarten Streifen 3 ausgehende, im Wesentlichen gegen das Ätzen beständige [111]-Oberflächen am Boden eines zwischen den Streifen 3 gebildeten Grabens aufeinandertreffen.

Fig. 2 zeigt den Wafer 1 nach dem Ätzen. Zwischen den ätzbeständigen Streifen 3 sind Gräben 4 gebildet, deren Flanken 5, 6 jeweils durch [111]-Oberflächen gebildet sind. Die Flanken 5, 6 erstrecken sich jeweils unter einem Winkel θ=von 54,7° zu den unter den ätzbeständigen Streifen 3 erhalten gebliebenen Resten der [100]-Oberfläche 2.

Die ätzbeständigen Streifen 3 werden beseitigt.

Einer ersten Ausgestaltung der Erfindung zufolge wird der geätzte Wafer 1 unmittelbar als Substrat 7 für einen THz-Emitter verwendet, indem eine Metall-Dünnschichtstruktur 8 auf dem Wafer 1 gebildet wird. Ein hierfür verwendeter Wafer 1 besteht vorzugsweise aus hochreinem Silizium mit geringer intrinsischer Leitfähigkeit. Wenn gewünscht, kann auf der Oberfläche des Wafers 1 eine elektrisch isolierende Schicht, z.B. aus SiO$_2$, erzeugt werden. Wie in Fig. 3 gezeigt wird ein Strom 9 aus Metalldampf oder einer sich an der Waferoberfläche zersetzenden gasförmigen Metallverbindung in streifendem Einfall über die Oberfläche des Wafers 1 geleitet. Der Winkel α zwischen der Oberfläche 2 und dem Strom 9 ist höchstens so groß wie der Winkel θ, so dass von den zwei Flanken 5, 6 jedes Grabens 4 jeweils eine Flanke 6 komplett im Strömungsschatten liegt und unbeschichtet bleibt. Ein zu einer Sohle 10 des Grabens 4 benachbarter Teil 11 der Flanke 5 liegt ebenfalls im Strömungsschatten und bleibt unbeschichtet. In einem von der Sohle 10 entfernten Teil 12 der Flanke 5 und einem angrenzenden, unter der ätzbeständigen Schicht 3 ungeätzt gebliebenen Teil der ursprünglichen Oberfläche 2 entsteht jeweils ein Metallstreifen 13. Die Metallstreifen 13 bilden in ihrer Gesamtheit ein Strichgitter, dessen Gitterkonstante d dem Abstand zwischen den ätzbeständigen Streifen 3 entspricht.

Die Bildung der Streifen 13 des Strichgitters läuft in wenigstens zwei Schritten ab. In einem ersten Schritt wird in jedem Streifen 13 eine Schicht 14 aus Metall mit starker Spin-Bahn-Kopplung wie etwa Pt, Ta oder W abgeschieden; in einem zweiten Schritt wird eine ferromagnetische Schicht 15 erzeugt. Über den Schichten 14, 15 können, wenn gewünscht, weitere Paare von Schichten gleicher Zusammensetzung abgeschieden werden. Einer bevorzugten Ausgestaltung zufolge ist eine einzige ferromagnetische Schicht zwischen Schichten aus zwei verschiedenen Metallen mit jeweils unterschiedlichen Vorzeichen des Spin-Hall-Effektes angeordnet.

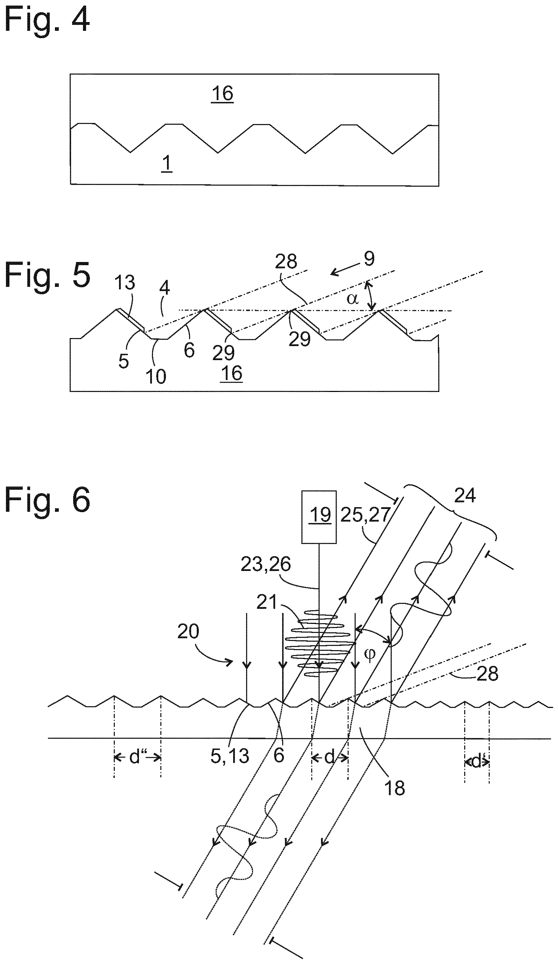

Einer zweiten Ausgestaltung zufolge dient der geätzte Wafer 1 als Matrize, an der ein Substrat 16 aus Kunststoff abgeformt wird, wie in Fig. 4 gezeigt. Anschließend wird das so erhaltene Substrat 16 einer Metallabscheidung wie oben mit Bezug auf Fig. 3 beschrieben unterzogen. Wie in Fig. 5 gezeigt, sind hier, anders als in Fig. 3, die Grate 17 zwischen zwei Gräben 4 scharfkantig, während die Sohle 10, komplementär zu den ungeätzt gebliebenen Resten der ursprünglichen Waferoberfläche 2, eine nichtverschwindende Breite haben kann. Die Metallstreifen 13 sind deshalb hier, bei gleichem Einfallswinkel α des Stroms 7, auf die Flanken 5 beschränkt und eben. Wenn der Einfallswinkel größer gewählt wird als in der Fig. gezeigt, können die Metallstreifen 13 die komplette Flanke 5 und ggf. einen Teil der Sohle 10 ausfüllen.

Fig. 6 ist eine schematische Darstellung einer THz-Strahlungsquelle mit einem wie oben beschrieben hergestellten Emitter 18. Die Strahlungsquelle umfasst einen Femtosekundenlaser 19, dessen gepulster Strahl 20 entlang einer Einfallsrichtung 26 auf die Oberfläche des Emitters 18 gerichtet ist. Der Femtosekundenlaser 19 beleuchtet auf der Oberfläche des Substrats einen Fleck, dessen Durchmesser ein Vielfaches der Gitterkonstante d beträgt, d.h. von jedem Laserimpuls 21 wird eine Vielzahl von Streifen 13 des Gitters getroffen. Der Einfluss des Magnetfeldes der ferromagnetischen Schicht 15 ermöglicht es dem Laserimpuls 21, in der Schicht 14 einen Stromimpuls zu induzieren, der wiederum zur breitbandigen Emission von elektromagnetischer Strahlung 22 im THz-Bereich führt. Die Streifen 13 können (im Querschnitt) jeweils als Punktquellen aufgefasst werden, die jeweils für sich ungerichtet emittieren. Da die Anregung durch den Laserimpuls 21 jedoch gleichzeitig (bei Inzidenz des Laserstrahls 20 in Richtung einer mittleren Oberflächennormalen 23 des Emitters 18 (d.h. senkrecht zur ursprünglichen Oberfläche 2) oder mit einem zum Abstand zwischen den Streifen 13 proportionalen Zeitversatz (bei nicht senkrechter Einfallsrichtung des Laserstrahls 20) stattfindet, erfolgt die Emission durch die Streifen 13 mit einem festen Phasenverhältnis, das Interferenz ermöglicht. Um schmalbandige THz-Strahlung bei einer gewünschten Wellenlänge λ zu erhalten, genügt es daher, eine Blende 24 unter einem Winkel φ zur Oberflächennormalen 23 zu platzieren, der die Bedingung für konstruktive Interferenz zwischen den Emissionen der einzelnen Streifen

$$n\lambda = d(\sin \varphi - \sin \varphi_i)$$

nλ=d(sin φ - sin φi) erfüllt, wobei φi der Einfallswinkel des Laserstrahls 20 relativ zur Oberflächennormalen 23 (in Fig. 6 ist φ$_i$=0) ist und n eine ganze Zahl und vorzugsweise 1 oder -1 ist.

Die beiden Beugungsordnungen n=1 und n=-1 unterscheiden sich jeweils darin, zu welcher Seite der Einfallsrichtung des Laserstrahls 20 die Ausgangsrichtung der THz-Strahlung abgelenkt ist. Die bevorzugte, weil intensivere der beiden Beugungsordnungen ist jeweils diejenige, deren Ausgangsrichtung 25 weniger von der Oberflächennormalen der Streifen 13 abweicht. D.h. die Blende 24 ist jeweils so platziert, dass man entlang der durch sie verlaufenden Ausgangsrichtung 25 durch sie hindurch unter einem kleineren Winkel auf die metallbeschichteten Flanken 5 als auf die unbeschichteten Flanken 6 blickt. Im Idealfall kann die Ausgangsrichtung 25 mit der Richtung 28 des zum Beschichten verwendeten Stroms 9 übereinstimmen; diese ist auch nach Fertigstellung der Metall-Dünnschichtstruktur daran erkennbar, dass einander zugewandte Ränder 29 (siehe Fig. 5) von zwei benachbarten Streifen 13 auf einer in der Richtung 28 verlaufenden Geraden liegen. In diesem Fall füllen die Streifen 13 den entlang der Ausgangsrichtung 25 sichtbaren Teil der Oberfläche des Emitters 18 vollständig aus, und die Intensität der in diese Richtung 28 emittierten Strahlung erreicht ein Maximum.

Ein Maximum der Emission ist auch dann realisierbar, wenn die Ausgangsrichtung mit einer Oberflächennormalen 27 der Flanken 5 übereinstimmt, weil die Emissionsintensität eines Flächenstrahlers proportional zum Sinus des Winkels zwischen Emissionsrichtung und Oberflächennormaler ist und somit in Richtung der Oberflächennormalen ein Maximum erreicht.

Um einen möglichst hohen Wirkungsgrad bei der Erzeugung der THz-Strahlung zu erzielen, kommen daher folgende Kombinationen von Einfalls- und Ausgangsrichtung in Betracht:

1. Einfallsrichtung entlang der mittleren Oberflächennormalen 23 des Emitters (der [100]-Richtung), Ausgangsrichtung entlang der Oberflächennormalen 27 der Flanken 5;
2. Einfallsrichtung entlang der mittleren Oberflächennormalen 23 des Emitters 18, Ausgangsrichtung gleich Richtung des Stroms 9;
3. Einfallsrichtung entlang der Oberflächennormalen 27 der Flanken 5, Ausgangsrichtung gleich Richtung des Stroms 9;
4. Einfallsrichtung entlang der Oberflächennormalen 27 der Flanken 5, Ausgangsrichtung entlang der mittleren Oberflächennormalen 23 des Emitters 18
5. Einfallsrichtung gleich Richtung des Stroms 9, Ausgangsrichtung entlang der mittleren Oberflächennormalen 23 des Emitters 18;
6. Einfallsrichtung gleich Richtung des Stroms 9, Ausgangsrichtung entlang der Oberflächennormalen der Flanken 5.

Um ohne Veränderung des Strahlengangs von Laser und THz-Strahlung in der Strahlungsquelle der Fig. 6 Strahlung unterschiedlicher Wellenlängen über die Blende 24 auskoppeln zu können, können Emitter 18 mit unterschiedlichen Gitterkonstanten d verwendet werden. Im Falle der Fig. 6 sind auf dem Substrat 16 drei Gitter mit unterschiedlichen Gitterkonstanten d, d', d" realisiert, die durch Verschieben senkrecht zur Oberflächennormalen und quer zu den Streifen wahlweise im Laserstrahl 20 platziert werden können. Trotz der unterschiedlichen Gitterkonstanten können die verschiedenen Gitter in einem einzigen Ätzprozess erzeugt werden, da das Tiefenwachstum der einzelnen Gräben 4 der verschiedenen Gitter im Wesentlichen endet, sobald die [100]-Fläche an ihrer Sohle verschwunden ist und deshalb der Ätzprozess so lange fortgesetzt werden kann, bis auch die breitesten Gräben fertig sind.

Einer Abwandlung zufolge können die Abstände zwischen den Streifen über die Breite des Emitters 18 hinweg kontinuierlich zu- oder abnehmen. Sofern die Änderung langsam genug ist, um im jeweils vom Laserstrahl 20 beleuchteten Abschnitt des Emitters 18 Beugung gemäß der o.g. Formel zu beobachten zu können, kann mit einem solchen Emitter die an der Blende 24 austretende THz-Strahlung kontinuierlich durchgestimmt werden.

Derselbe Effekt kann erreicht werden, wenn die Gräben 4 nicht auf ihrer gesamten Länge in gleichem Abstand verlaufen, sondern in einer fächer-ähnlichen Anordnung realisiert werden, in der die Gräben in Abschnitte unterteilt sind, die jeweils parallel zu einem benachbarten Abschnitt eines anderen Grabens verlaufen, bei denen aber der Abschnitt zwischen benachbarten Abschnitten verschiedener Gräben in Längsrichtung der Gräben variiert; in diesem Fall ändert sich die Gitterkonstante im vom Laserstrahl 20 beleuchteten Teil des Emitters 18, wenn dieser in Längsrichtung der Gräben 4 verschoben wird.

Sowohl das Siliziumsubstrat 7 als auch das Kunststoffsubstrat 16 sind für die THz-Strahlung transparent. Die Beugungsbedingung kann daher sowohl von reflektierend an der dem Laserstrahl 20 zugewandten Seite der Streifen 13 emittierter THz-Strahlung erfüllt werden als auch von solcher, die sich durch das Substrat hindurch ausbreitet und an dessen vom Laser 16 abgewandter Seite emittiert wird, wie in Fig. 6 durch gestrichelte Linien angedeutet.

Wenn das Substrat für den Laserstrahl 20 transparent ist, kann auch eine invertierte Anordnung des Emitters 18, mit dem Strichgitter an dessen vom Laser 16 abgewandten Seite, in Betracht gezogen werden.

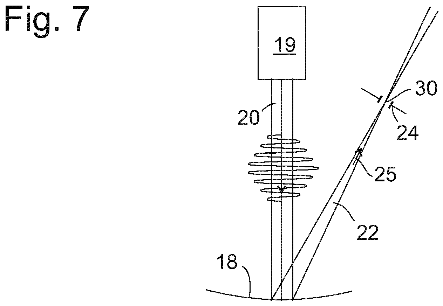

Fig. 7 zeigt eine Abwandlung der THz-Strahlungsquelle von Fig. 6. In dieser Abwandlung ist das durch Abformen gemäß Fig. 4 erhaltene Substrat 16 zu einer Zylinderfläche gebogen, deren Krümmungsachse in Längsrichtung der Streifen 13 verläuft. Infolgedessen durchläuft die emittierte THz-Strahlung entlang der Ausgangsrichtung 25 einen Brennpunkt 30, und durch Platzieren der Blende 24 um den Brennpunkt 30 kann ein besonders schmalbandiger Anteil der THz-Emission ausgefiltert werden.

**Bezugszeichen**

1 Wafer
2 [100]-Oberfläche
3 Streifen
4 Graben
5 Flanke
6 Flanke
7 Substrat
8 Metall-Dünnschichtstruktur
9 Strom
10 Sohle
11 Teil der Flanke 5
12 Teil der Flanke 5
13 Metallstreifen
14 Schicht
15 Schicht
16 Substrat
17 Grat
18 Emitter
19 (Femtosekunden-)Laser
20 Strahl
21 Laserimpuls
22 Thz-Strahlung
23 Oberflächennormale
24 Blende

25 Ausgangsrichtung
26 Einfallsrichtung
27 Oberflächennormale
28 Richtung des Stroms 9
29 Rand eines Streifens 13
30 Brennpunkt

**Patentansprüche**

1. Emitter (18) für eine THz-Strahlungsquelle, mit einem Substrat (7, 16) und einer als Gitter strukturierten Metall-Dünnschichtstruktur (8), die eine Mehrzahl von auf einer Oberfläche des Substrats (7, 16) in einer Längsrichtung orientierten,eine ferromagnetische Schicht (15) enthaltenden Streifen (13) umfasst, **dadurch gekennzeichnet, dass** die Oberfläche in einem Schnitt senkrecht zur Längsrichtung einen wellenförmigen Verlauf mit einander abwechselnden ersten und zweiten Flanken (5, 6) aufweist, die gegen eine mittlere Oberflächennormale (23) der Oberfläche in jeweils entgegengesetzte Richtungen geneigt sind, und dass die Streifen (13) jeweils nur auf den ersten Flanken (5) angeordnet sind.

2. Emitter nach Anspruch 1, **dadurch gekennzeichnet, dass** wenigstens die ersten Flanken (5) eben sind.

3. Emitter nach Anspruch 1 oder 2, **dadurch gekennzeichnet, dass** jeweils eine erste und eine zweite Flanke (5, 6) einen Graben (4) in dem Substrat (7, 16) bilden, und dass die ersten Flanken (5) jeweils in einem zu einer Sohle (10) des Grabens (4) benachbarten Teil (11) frei von dem Streifen (13) sind und einem von der Sohle (10) entfernten Teil (12) von dem Streifen (13) bedeckt sind.

4. Emitter nach einem der Ansprüche 1 bis 3, **dadurch gekennzeichnet, dass** das Substrat (7) ein Halbleitereinkristall ist.

5. Emitter nach Anspruch 4, **dadurch gekennzeichnet, dass** die mittlere Oberflächennormale (23) einer [100]-Achse des Einkristalls entspricht und/oder die ersten Flanken (5, 6) [111]-Ebenen des Einkristalls sind.

6. Emitter nach einem der Ansprüche 1 bis 3, **dadurch gekennzeichnet, dass** das Substrat (16) ein vorzugsweise biegsamer Formkörper aus Kunststoff ist.

7. Emitter nach Anspruch 6, **dadurch gekennzeichnet, dass** die ersten und zweiten Flanken (5, 6) einen Winkel von 110-115° aufspannen.

8. THz-Strahlungsquelle mit einem Emitter (18) nach einem der Ansprüche 1 bis 6 und einer Laserquelle (19) zum Lenken von kurzen Laserpulsen (21) auf den Emitter (18) in einer Einfallsrichtung (26), **gekennzeichnet durch** eine Blende (24), die einen von dem Emitter (18) in einer Ausgangsrichtung (25) ausgehenden Strahlengang für THz-Strahlung (22) definiert, deren Wellenlänge kleiner ist als eine Gitterkonstante (d) des Gitters, und wobei die Ausgangsrichtung (25) weder in der Einfallsrichtung (26) noch in einer Ausfallsrichtung von an dem Emitter gespiegelten Laserimpulsen orientiert ist.

9. THz-Strahlungsquelle nach Anspruch 8, **dadurch gekennzeichnet, dass** Einfalls- und Ausgangsrichtung (26, 25) mit zwei verschiedenen der folgenden Richtungen übereinstimmen: eine mittlere Oberflächennormale (23) des Emitters (18), eine Oberflächennormale (27) der ersten Flanken (5), eine Richtung (28), in der einander zugewandte Ränder (29) benachbarter Streifen (13) auf einer Linie liegen.

10. THz-Strahlungsquelle nach einem der Ansprüche 8-9, **dadurch gekennzeichnet, dass** der Emitter (18) zylindrisch gekrümmt ist.

11. THz-Strahlungsquelle nach einem der Ansprüche 8-9, **dadurch gekennzeichnet, dass** der Emitter (18) Zonen mit unterschiedlicher Gitterkonstante aufweist, die wahlweise im Strahl (20) der Laserquelle (19) platzierbar sind.

12. Verfahren zum Fertigen eines Emitters (18) für eine THz-Strahlungsquelle mit den Schritten:

    - Bereitstellen eines Substrats (7, 16), das eine Oberfläche mit in einem Schnitt wellenförmigem Verlauf mit einander abwechselnden ersten und zweiten Flanken (5, 6) aufweist, die gegen eine mittlere Oberflächennormale (23) der Oberfläche in jeweils entgegengesetzte Richtungen geneigt sind,
    - Lenken eines metallhaltigen Materialstroms (9) auf die Oberfläche, unter streifendem Einfall derart, dass jede zweite Flanke (6) im Strömungsschatten einer ersten Flanke (5) liegt, um durch Abscheiden von Metall nur auf den ersten Flanken (5) eine als Gitter strukturierte Metall-Dünnschichtstruktur (8) mit in einer Längsrichtung orientierten, eine ferromagnetische Schicht (15) enthaltenden Streifen (13) abzuscheiden.

13. Verfahren nach Anspruch 12 ferner mit den vorbereitenden Schritten

    - Bilden eines Gitters aus Streifen (3) eines ätzbeständiges Materials auf einer ursprünglichen Oberfläche (2) eines Halbleiterkristalls (1),

- Anisotropes Ätzen des Halbleiterkristalls (1), um eine geätzte Oberfläche zu bilden, die zwischen den Streifen (3) Gräben (4) mit jeweils einer ersten und einer zweiten Flanke (5, 6) aufweist, wobei die Oberflächennormalen der ersten und zweiten Flanken (5, 6) relativ zur Oberflächennormalen (23) der ursprünglichen Oberfläche (2) in entgegengesetzte Richtungen geneigt sind.

14. Verfahren nach Anspruch 13, bei dem die dem metallhaltigen Materialstrom (9) ausgesetzte Oberfläche die geätzte Oberfläche oder eine durch Abformen der geätzten Oberfläche erhaltene Oberfläche ist.

**Claims**

1. An emitter (18) for a THz radiation source, comprising a substrate (7, 16) and a metal thin-film structure (8) structured as a grating, which comprises a plurality of strips (13) oriented in a longitudinal direction on a surface of the substrate (7, 16) and containing a ferromagnetic layer (15), **characterised in that** the surface has a wave-like profile in a section perpendicular to the longitudinal direction, with alternating first and second flanks (5, 6) that are inclined in opposite directions with respect to a mean surface normal (23) of the surface, and **in that** the strips (13) are each located only on the first flanks (5).

2. The emitter of claim 1, **characterised in that** at least the first flanks (5) are flat.

3. The emitter of claim 1 or 2, characterised respective first and second flanks (5, 6) form a trench (4) in the substrate (7, 16), and the first flanks (5) are free of the strip (13) in a part (11) adjacent to a sole (10) of the trench (4) and are covered by the strip (13) in a part (12) remote from the sole (10).

4. The emitter of one of claims 1 to 3, **characterised in that** the substrate (7) is a semiconductor monocrystal.

5. The emitter of claim 4, **characterised in that** the mean surface normal (23) corresponds to a [100] axis of the monocrystal and/or the first flanks (5, 6) are [111] planes of the single crystal.

6. The emitter of one of claims 1 to 3, **characterised in that** the substrate (16) is a preferably flexible moulding made of plastic.

7. The emitter of claim 6, **characterised in that** the first and second flanks (5, 6) form an angle of 110-115°.

8. A THz radiation source having an emitter (18) according to one of claims 1 to 6 and a laser source (19) for directing short laser pulses (21) onto the emitter (18) in an incidence direction (26), **characterised by** a diaphragm (24) which defines a beam path for THz radiation (22) emanating from the emitter (18) in an output direction (25) for THz radiation (22), the wavelength of which is shorter than a grating constant (d) of the grating, and wherein the output direction (25) is oriented neither in the direction of incidence (26) nor in a direction of emergence of laser pulses reflected at the emitter.

9. The THz radiation source of claim 8, **characterised in that** the direction of incidence (26) and the output direction (25) correspond to two different ones of the following directions: a mean surface normal (23) of the emitter (18), a surface normal (27) of the first flanks (5), a direction (28) in which facing edges (29) of adjacent strips (13) lie on one line.

10. The THz radiation source of one of claims 8-9, **characterised in that** the emitter (18) is cylindrically curved.

11. The THz radiation source of one of claims 8-9, **characterised in that** the emitter (18) has zones with different grating constants, which can be placed selectively in the beam (20) of the laser source (19).

12. A method for producing an emitter (18) for a THz radiation source, comprising the steps of:

    - providing a substrate (7, 16) which has a surface with, in a section, a wave-shaped profile with alternating first and second flanks (5, 6) which are inclined in opposite directions with respect to a mean surface normal (23) of the surface,
    - directing a metal-containing material stream (9) onto the surface, at a grazing angle of incidence, such that every second flank (6) lies in the flow shadow of a first flank (5), in order to deposit a metal thin-film structure (8) structured as a grating and having strips (13) which are oriented in a longitudinal direction and contain a ferromagnetic layer (15) by depositing metal on the first flanks (5) only.

13. The Method of claim 12, further comprising the preparatory steps of

    - forming a grating of strips (3) of an etch-resistant material on an initial surface (2) of a semiconductor crystal (1),
    - anisotropically etching the semiconductor crystal (1) to form an etched surface having trenches (4) between the strips (3), each trench having a first and a second flank (5, 6),

wherein the surface normals of the first and second flanks (5, 6) are inclined in opposite directions relative to the surface normal (23) of the original surface (2).

14. A method according to claim 13, wherein the surface exposed to the metal-containing material stream (9) is the etched surface or a surface obtained by moulding the etched surface.

## Revendications

1. Emetteur (18) pour une source de rayonnement THz, comprenant un substrat (7, 16) et une structure à couche mince métallique (8) structurée en réseau, qui comprend une pluralité de bandes (13) orientées dans une direction longitudinale sur une surface du substrat (7, 16) et contenant une couche ferromagnétique (15), **caractérisé en ce que en ce que** la surface présente, dans une coupe perpendiculaire à la direction longitudinale, un tracé ondulé avec des premiers et deuxièmes flancs (5, 6) alternés qui sont inclinés dans des directions respectivement opposées par rapport à une normale moyenne (23) à la surface, et **en ce que** les bandes (13) sont disposées respectivement uniquement sur les premiers flancs (5).

2. Émetteur selon la revendication 1, **caractérisé en ce qu'**au moins les premiers flancs (5) sont plans.

3. Emetteur selon la revendication 1 ou 2, **caractérisé en ce que** respectivement un premier et un deuxième flancs (5, 6) forment une tranchée (4) dans le substrat (7, 16), et **en ce que** les premiers flancs (5) sont respectivement libres de la bande (13) dans une partie (11) voisine d'un fond (10) de la tranchée (4) et sont recouverts de la bande (13) dans une partie (12) éloignée dudit fond (10).

4. Émetteur selon l'une des revendications 1 à 3, **caractérisé en ce que** le substrat (7) est un monocristal semi-conducteur.

5. Émetteur selon la revendication 4, **caractérisé en ce que** la normale à la surface moyenne (23) correspond à un axe [100] du monocristal et/ou les premiers flancs (5, 6) sont des plans [111] du monocristal.

6. Émetteur selon l'une des revendications 1 à 3, **caractérisé en ce que** le substrat (16) est un corps moulé, de préférence flexible, en matière plastique.

7. Émetteur selon la revendication 6, **caractérisé en**

**ce que** les premier et deuxième flancs (5, 6) forment un angle de 110 à 115°.

8. Source de rayonnement THz avec un émetteur (18) selon l'une des revendications 1 à 6 et une source laser (19) pour diriger de courtes impulsions laser (21) sur l'émetteur (18) dans une direction d'incidence (26), **caractérisée par** un diaphragme (24) qui définit un trajet de faisceau pour le rayonnement THz (22) partant de l'émetteur (18) dans une direction de sortie (25), dont la longueur d'onde est inférieure à une constante de réseau (d) du réseau, la direction de sortie (25) n'étant orientée ni dans la direction d'incidence (26) ni dans une direction de sortie d'impulsions laser réfléchies sur l'émetteur.

9. Source de rayonnement THz selon la revendication 8, **caractérisée en ce que** la direction d'incidence et la direction de sortie (26, 25) coïncident avec deux directions différentes parmi les suivantes : une normale moyenne (23) à la surface de l'émetteur (18), une normale à la surface (27) des premiers flancs (5), une direction (28) dans laquelle des bords (29) tournés l'un vers l'autre de bandes voisines (13) se trouvent sur une seule ligne.

10. Source de rayonnement THz selon l'une quelconque des revendications 8 à 9, **caractérisée en ce que** l'émetteur (18) a une courbure cylindrique.

11. Source de rayonnement THz selon l'une des revendications 8 à 9, **caractérisée en ce que** l'émetteur (18) comporte des zones ayant des constantes de réseau différentes, qui peuvent être placées sélectivement dans le faisceau (20) de la source laser (19).

12. Procédé de fabrication d'un émetteur (18) pour une source de rayonnement THz, comprenant les étapes consistant à :

- préparer un substrat (7, 16) qui présente une surface avec, en coupe, un tracé ondulé comportant des premiers et des deuxièmes flancs (5, 6) alternés qui sont inclinés dans des directions respectivement opposées par rapport à une normale moyenne (23) à la surface,
- diriger un flux de matériau (9) contenant du métal sur la surface, avec une incidence rasante, de telle sorte que chaque deuxième flanc (6) se trouve dans l'ombre de flux d'un premier flanc (5), afin de déposer, par dépôt de métal uniquement sur les premiers flancs (5), une structure de couche mince métallique (8) structurée sous forme de grille avec des bandes (13) orientées dans une direction longitudinale et contenant une couche ferromagnétique (15).

**13.** Procédé selon la revendication 12, comprenant en outre les étapes préparatoires consistant à:

- former un réseau de bandes (3) d'un matériau résistant à la gravure sur une surface initiale (2) d'un cristal semi-conducteur (1),
- graver de manière anisotrope le cristal semi-conducteur (1) pour former une surface gravée qui présente entre les bandes (3) des tranchées (4) ayant chacune un premier et un deuxième flanc (5, 6),

les normales à la surface des premier et deuxième flancs (5, 6) étant inclinées dans des directions opposées par rapport à la normale à la surface (23) de la surface initiale (2).

**14.** Procédé selon la revendication 13, dans lequel la surface exposée au flux de matériau contenant du métal (9) est la surface gravée ou une surface obtenue par moulage de la surface gravée.

# Fig. 1

# Fig. 2

# Fig. 3

Fig. 4

Fig. 5

Fig. 6

Fig. 7

19

20

30

24

25

22

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 110441929 A

**In der Beschreibung aufgeführte Nicht-Patentliteratur**

- *Nature Nanotechnology*, 2013, vol. 8, 256-260